# EUROPÄISCHE PATENTSCHRIFT

(11) **EP 2 650 520 B1**
(45) Veröffentlichungstag und Bekanntmachung des Hinweises auf die Patenterteilung: **12.06.2019**
(21) Anmeldenummer: 13001834.4
(22) Anmeldetag: 09.04.2013
(51) Int. Cl.: F02K 3/04, F02K 3/075, F01D 9/04, F02C 9/18

(54) **Fluggasturbine mit einem Entlastungskanal in einem Leitschaufelfußelement eines Nebenstromkanals**
Aircraft gas turbine engine having a bleed channel in a guide vane root element of a bypass channel
Turbine à gaz d'aéronef avec canal de décharge dans un pied d'aube de guidage d'un canal de flux secondaire

(30) Priorität: 10.04.2012 DE 102012007130
(43) Veröffentlichungstag der Anmeldung: 16.10.2013
(73) Patentinhaber: Rolls-Royce Deutschland Ltd & Co KG, 15827 Blankenfelde-Mahlow (DE)
(72) Erfinder: Rosenau, Knut, 15378 Herzfelde (DE); Pettersson, Lars, 10178 Berlin (DE); Bilger, Lutz, 14979 Birkenhain (DE); Cox, Andrew, 14163 Berlin (DE)
(74) Vertreter: Hoefer & Partner Patentanwälte mbB

(56) Entgegenhaltungen:
- FR-A1- 2 926 328
- US-A- 4 463 552
- US-A1- 2003 079 465
- US-A1- 2005 106 009
- US-B2- 7 785 066

## Beschreibung

Die Erfindung bezieht sich auf eine Fluggasturbine mit einem Entlastungskanal in einem Leitschaufelfußelement eines Nebenstromkanals. Im Einzelnen bezieht sich die Erfindung auf eine Fluggasturbine mit einem Kerntriebwerk und einem dieses umgebenden Nebenstromkanal, wobei das Kerntriebwerk in seinem Einströmbereich einen Vorverdichter umfasst, im Bereich dessen zumindest ein Entlastungskanal zur Zuleitung einer Luftströmung von dem Vorverdichter in den Nebenstromkanal vorgesehen ist, sowie mit einer stromab eines Fan im Nebenstromkanal angeordneten Leitschaufelreihe.

Aus dem Stand der Technik sind Konstruktionen vorbekannt, bei welchen im Nebenstromkanal stromab des Fan Leitschaufeln angeordnet sind, um die Strömung durch den Nebenstromkanal zu leiten und verbessern. Die eigentliche Lagerung des Kerntriebwerks erfolgt dann über zusätzliche, stromab der Leitschaufeln angeordnete Streben, welche sich radial durch den Nebenstromkanal erstrecken und Teil einer Tragstruktur für das Kerntriebwerk bilden.

Bei derartigen Konstruktionen kann es sich als nachteilig erweisen, dass die Streben den Strömungsverlauf in den Nebenstromkanal beeinträchtigen und somit den Gesamtwirkungsgrad der Fluggasturbine vermindern. Ein weiterer Nachteil der vorbekannten Konstruktionen besteht darin, dass der Entlastungskanal aus konstruktiven Gründen stromab der Leitschaufeln, jedoch stromauf der Streben (Strukturelemente) angeordnet ist. Dies erfordert zum einen eine ausreichende axiale Baulänge und führt zum anderen zu aufwendigen Konstruktionen, welche kostenmäßig ungünstig sind und strömungstechnisch nicht immer optimal ausgestaltet werden können.

Im Stand der Technik wurde vorgeschlagen, die Leitschaufeln selbst als tragende Elemente zur Lagerung des Kerntriebwerks auszubilden, so dass diese strukturelle Rippen oder Streben bilden. Die Leitschaufeln tragen bei einer derartigen Konstruktion somit auch die Strukturlasten. Dabei erweist es sich als nachteilig, dass der Nebenstromkanal den Lastpfad im Frontrahmen des Kerntriebwerks kreuzt. Die Ausbildung einer geeigneten Tragstruktur erfordert somit einen hohen konstruktiven Aufwand.

Ferner sind aus US 2005/0106009 A1, US 7 785 066 B2, US 2003/0079465 A1, FR 2 926 328 A1 und US 4 463 552 A Fluggasturbinen mit Kerntriebwerken bekannt, in welchen jeweils einen Entlastungskanal von einem Vorverdichter zu einem Nebenstromkanal ausgebildet ist.

Der Erfindung liegt die Aufgabe zugrunde, eine Fluggasturbine der eingangs beschriebenen Art zu schaffen, welche bei einfachem Aufbau und einfacher, kostengünstiger Herstellbarkeit die Nachteile des Standes der Technik vermeidet und eine optimierte Konstruktion der Leitschaufel bzw. des Schaufelfußes der Leitschaufel bereitstellt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass ein Schaufelfuß der Leitschaufel als das Kerntriebwerk lagerndes Strukturelement ausgebildet ist und dass der Entlastungskanal in dem Schaufelfuß ausgebildet ist und stromab der Leitschaufel in den Nebenstromkanal mündet.

Erfindungsgemäß wird somit ein optimaler struktureller Kraftfluss zur Lagerung des Kerntriebwerks gebildet, welcher mit einer verlustarmen Strömung durch den Entlastungskanal kombiniert ist. Hierzu wird der Entlastungskanal (Booster Bleed Kanal) in die Plattform der Leitschaufel integriert. In besonders günstiger Ausgestaltung der Erfindung ist dabei vorgesehen, dass sich der Auslass des Vorverdichters aus dem Kernstromkanal (Einströmbereich des Entlastungskanals) in Triebwerksrichtung vor dem Frontrahmen befindet. Der Auslass aus dem Vorverdichter (Booster) kann dabei sowohl aus verschiedenen Verdichterstufen des Vorverdichters als auch nach dem Vorverdichter erfolgen. Der Luftauslass aus dem Entlastungskanal und somit aus der Plattform der Leitschaufeln in den Nebenstromkanal befindet sich in Triebwerksrichtung nach den Leitschaufeln. Erfindungsgemäß ist somit eine Konstruktion geschaffen, bei welcher der Entlastungskanal den Lastpfad für die Strukturlasten im Frontrahmen der Fluggasturbine kreuzt, ohne diesen zu "zerschneiden". Dies bedeutet, dass der Lastpfad durch die Leitschaufeln und deren Fußbereiche ungestört verlaufen kann und der Entlastungskanal diesen Bereich durchdringt, ohne die kraftübertragende Struktur zu stören.

In besonders günstiger Ausgestaltung der Erfindung ist vorgesehen, dass der Entlastungskanal in seinem an den Vorverdichter angrenzenden Bereich im Wesentlichen in Radialrichtung verläuft. Da auch die Strukturlasten im Wesentlichen in Radialrichtung eingebracht werden und da somit strukturelle Konstruktionselemente ebenfalls in radialer Richtung verlaufen, kann der Entlastungskanal integriert werden, ohne die Struktur der Aufhängung des Kerntriebwerks zu beeinträchtigen.

In bevorzugter Ausgestaltung der Erfindung ist vorgesehen, dass zwischen jeder Leitschaufel ein Entlastungskanal ausgebildet ist. Es ergeben sich somit um den Umfang des Vorverdichters eine Vielzahl von Entlastungskanälen, welche hinsichtlich ihrer Zahl der Zahl der Leitschaufeln entsprechen.

In weiterer, günstiger Weiterbildung der Erfindung ist vorgesehen, dass ein abströmseitiger Bereich des Entlastungskanals in dem Schaufelfuß der jeweiligen Leitschaufel im Wesentlichen in axialer Richtung angeordnet ist. Dabei ist es besonders vorteilhaft, wenn die Entlastungskanäle jeweils in den Zwischenräumen zweier benachbarter Leitschaufeln angeordnet sind. Hierdurch wird der Kraftfluss durch die Leitschaufel in die Lagerstruktur nicht unterbrochen, vielmehr kann der Entlastungskanal in einem Bereich münden, in welchem verringerte Strukturanforderungen vorliegen.

In günstiger Ausgestaltung der Erfindung kann weiter vorgesehen sein, dass zumindest ein Teil des sich axial erstreckenden Entlastungskanals mittels eines Verschlusselements zum Nebenstromkanal verschließbar ist. Das Verschlusselement kann beispielsweise in Form eines flachen Bauelements, beispielsweise eines Verschlussbleches ausgebildet sein.

In besonders günstiger Ausgestaltung der Erfindung ist vorgesehen, dass der Schaufelfuß der Leitschaufel, d.h., das lastübertragende Strukturteil der Leitschaufel als Gusskonstruktion ausgebildet ist. Hierdurch lassen sich zum einen komplexe Geometrien besonders einfach und mit geringem Gewicht ausbilden. Zum anderen ist eine Kostenoptimierung durch Verwendung einer Vielzahl gleicher Gusselemente möglich. Jeweils mehrere Schaufelfüße sind als ein sich in Umfangsrichtung erstreckendes Segment ausgebildet. Somit ist es nicht erforderlich, eine Vielzahl einzelner Schaufelfüße und Leitschaufeln zu montieren. Vielmehr können einzelne Segmente vorgefertigt und nachfolgend eingebaut werden. Die Leitschaufeln können erfindungsgemäß somit paarig oder in Sektoren mit mehreren integrierten Leitschaufeln oder auch als Vollring gefertigt werden. Ein Nebenstromsteg, welcher einen Teil des Schaufelfußes bildet und eine radial innenliegende Begrenzung des Nebenstromkanals bildet, kann entweder in die Schaufelfußkonstruktion der Leitschaufeln integriert oder als separates Bauteil ausgebildet sein.

Im Folgenden wird die Erfindung anhand eines Ausführungsbeispiels in Verbindung mit der Zeichnung beschrieben. Dabei zeigt:
- Fig. 1: zeigt eine schematische Darstellung eines Gasturbinentriebwerks gemäß der vorliegenden Erfindung;
- Fig. 2: eine vergrößerte Axial-Teilschnitt-Ansicht eines Ausführungsbeispiels eines Schaufelfußbereichs einer Leitschaufel;
- Fig. 3: eine perspektivische Teilansicht der Anordnung gemäß Fig. 2;
- Fig. 4: eine perspektivische Teilansicht der in den Fig. 2 und 3 gezeigten Ausgestaltungen; und
- Fig. 5: eine weitere perspektivische Ansicht der in den Fig. 3 und 4 gezeigten Ausgestaltung.

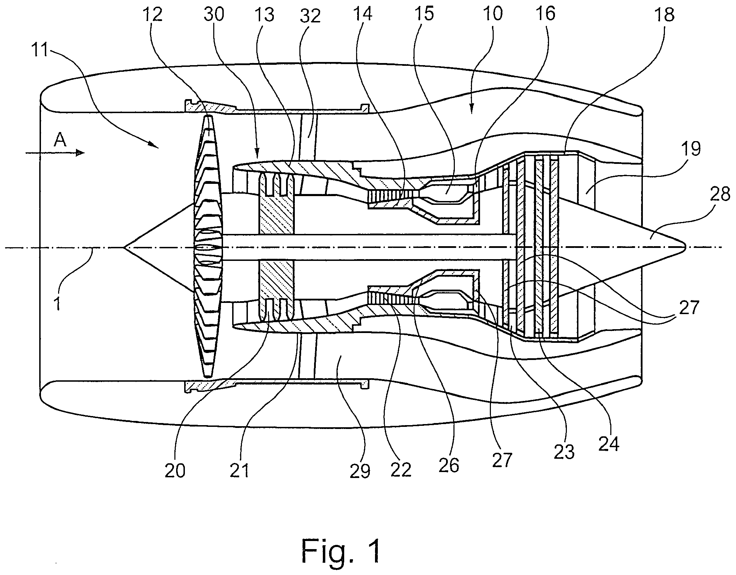

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Vorverdichter 13, einen Hochdruckkompressor 14, eine Brennkammer 15, eine Hochdruckturbine 16 und eine Niederdruckturbine 18 sowie eine Abgasdüse 19, die sämtlich um eine zentrale Triebwerksachse 1 angeordnet sind.

Der Vorverdichter 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Niederdruckturbine 18 gekoppelt sind.

Die Turbinenabschnitte 16, 18 weisen ähnliche Stufen auf, umfassend eine Anordnung von festen Leitschaufeln 23, die radial nach innen vom Gehäuse 21 in den ringförmigen Strömungskanal durch die Turbinen 16, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

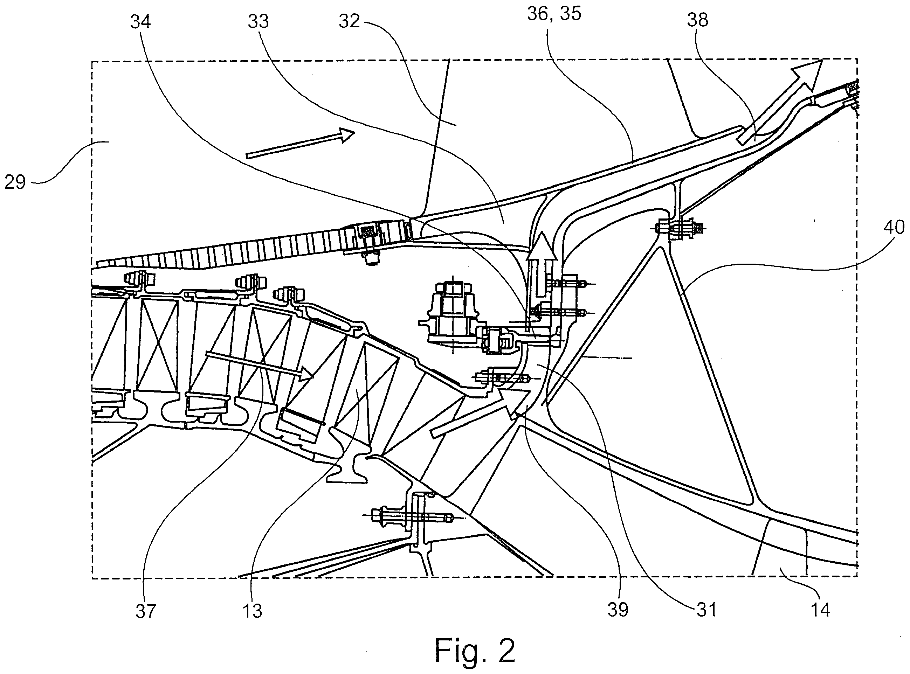

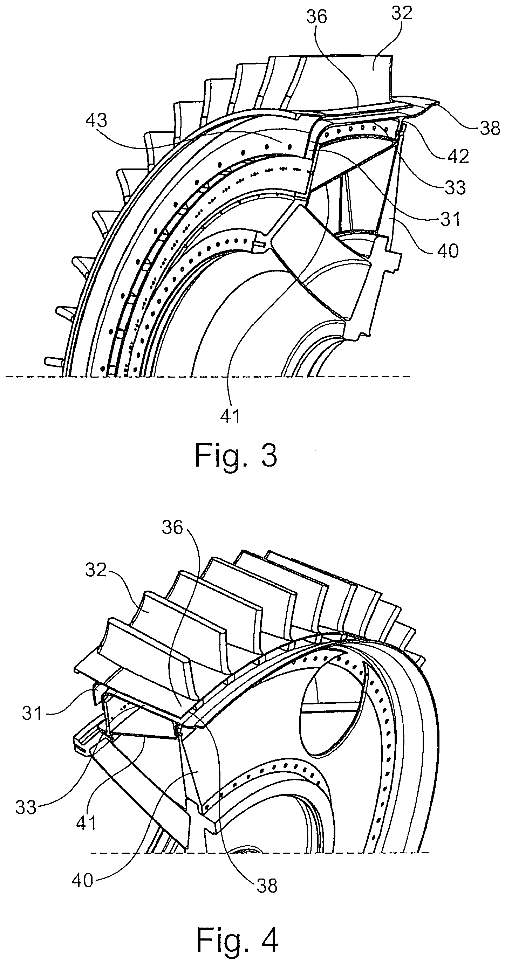

Die Fig. 2 zeigt eine detaillierte Axial-Teilansicht eines Ausführungsbeispiels der Erfindung. Dabei ist ein Nebenstromkanal 29 dargestellt, durch welchen der aus dem Fan 12 austretende Nebenstrom geleitet wird. In dem Nebenstromkanal 29 sind um den Umfang verteilt eine Vielzahl von Leitschaufeln 32 angeordnet, welche die Luftströmung durch den Nebenstromkanal 29 leiten und zusätzlich als Strukturelemente zur Lagerung des Kerntriebwerks 10 dienen. Radial innerhalb des Nebenstromkanals 29 ist ein Kernstrom 37 dargestellt, welcher durch einen Vorverdichter 30 strömt. Stromab des Vorverdichters 30 sind Einströmöffnungen einer Vielzahl von um den Umfang verteilter Entlastungskanäle 31 ausgebildet. Die einzelnen Entlastungskanäle 31 erstrecken sich zunächst im Wesentlichen in radialer Richtung. In jedem Entlastungskanal 31 ist ein Verschlusselement 34 (Ventil) vorgesehen, so wie dies aus dem Stand der Technik vorbekannt ist. Die einzelnen Verschlusselemente 34 können zu einem ringartigen Bauteil zusammengefasst sein. Der Entlastungskanal 31 erstreckt sich somit radial nach außen in Richtung der Leitschaufel 32 innerhalb eines Schaufelfußes 33 und verläuft dann in einer im Wesentlichen axialen Richtung parallel zur Wandung des Nebenstromkanals 29. Stromab der Leitschaufeln 32 sind eine Vielzahl von Austrittsöffnungen 38 ausgebildet, durch welche die Strömung durch den Entlastungskanal 31 in den Nebenstromkanal 29 mündet. Wie sich insbesondere aus der Darstellung der Fig. 4 ergibt, weisen die Entlastungskanäle 31 einen im Wesentlichen rechteckigen Querschnitt auf und erstrecken sich zwischen den einzelnen Leitschaufeln 32.

In einer Ausführung ist der jeweilige Schaufelfuß 33 der Leitschaufel 32 als Gussteil ausgebildet und umfasst einen Nebenstromsteg 36, der sowohl den Schaufelfuß 33 radial nach außen als auch den Nebenstromkanal 29 radial nach innen begrenzt. In einer weiteren Ausführung ist der Schaufelfuß 33 der Leitschaufel 32 als Gussteil ausgebildet, jedoch ist der Nebenstromsteg 35 als separates Bauteil ausgebildet. Dieses kann als Ring oder als Ringsegment ausgebildet sein.

Das Ausführungsbeispiel zeigt, dass der Schaufelfuß 33 mit Lagerelementen 40 und 41 verbunden ist. Dies kann durch Montage separater Lagerelemente oder durch einstückige Ausgestaltung des als Gusskonstruktion ausgeführten Schaufelfußes 33 erfolgen.

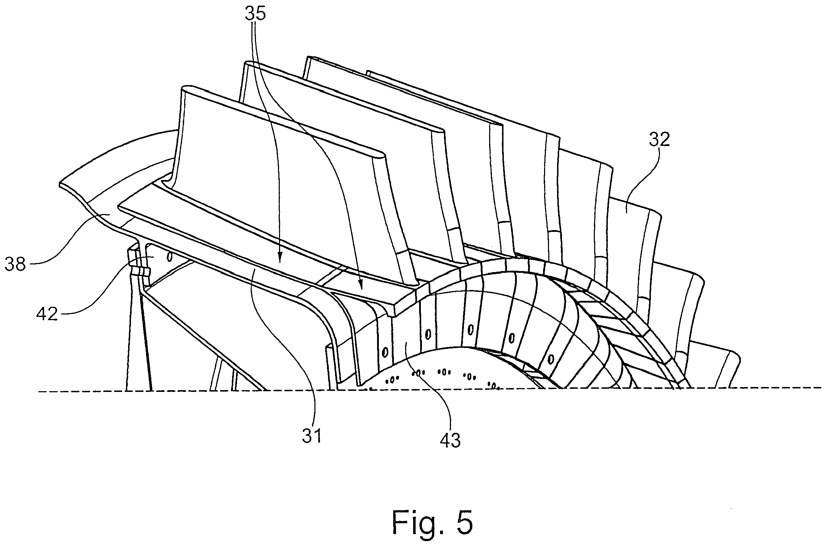

Wie sich insbesondere aus der Fig. 5 ergibt, ist erfindungsgemäß somit eine integrale Konstruktion geschaffen, bei welcher die über die Leitschaufeln eingeleiteten Lasten über den Schaufelfuß auf das Kerntriebwerk übertragen werden können, wobei die einzelnen Entlastungskanäle 31 in die Gesamtkonstruktion integriert sind und den Kraftverlauf nicht beeinträchtigen. Hierzu weist der Schaufelfuß insbesondere einstückig mit diesem ausgebildete Ringflansche 42 (hinterer Ringflansch) und 43 (vorderer Ringflansch) auf, welche zur Montage und Kraftübertragung dienen.

Die einzelnen Leitschaufeln 32 können als Ring oder als Ringsegment ausgebildet werden. Der Entlastungskanal 31 bildet in jedem Fall selbst einen Teil des Strukturelements des Schaufelfußes 33.

### Bezugszeichenliste:

- 1: Triebwerksachse
- 10: Gasturbinentriebwerk / Kerntriebwerk
- 11: Lufteinlass
- 12: Fan
- 13: Vorverdichter (Booster)
- 14: Hochdruckkompressor
- 15: Brennkammer
- 16: Hochdruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Nebenstromkanal
- 30: Vorverdichter
- 31: Entlastungskanal (Booster Bleed Kanal)
- 32: Leitschaufel / Leitschaufelreihe
- 33: Schaufelfuß
- 34: Verschlusselement / Ventil
- 35: Verschlusselement / Abdeckelement
- 36: Nebenstromsteg integral im Schaufelfuß
- 37: Kernstrom
- 38: Austrittsöffnung
- 39: Eintrittsöffnung
- 40: Lagerelement
- 41: Lagerelement
- 42: Ringflansch
- 43: Ringflansch

## Patentansprüche

1. Fluggasturbine mit einem Kerntriebwerk (10) und einem dieses umgebenden Nebenstromkanal (29), wobei das Kerntriebwerk (10) in seinem Einströmbereich einen Vorverdichter (30) umfasst, im Bereich dessen zumindest ein Entlastungskanal (31) zur Zuleitung einer Luftströmung von dem Vorverdichter (30) in den Nebenstromkanal (29) vorgesehen ist, sowie mit einer stromab eines Fans (12) im Nebenstromkanal (29) angeordneten Leitschaufelreihe (32), wobei ein Schaufelfuß (33) der Leitschaufel (32) als das Kerntriebwerk lagerndes Strukturelement ausgebildet ist und dass der Entlastungskanal (31) in dem Schaufelfuß (33) ausgebildet ist und stromab der Leitschaufel (32) in den Nebenstromkanal (29) mündet, **dadurch gekennzeichnet, dass**
mehrere Schaufelfüße (33) als ein sich in Umfangsrichtung erstreckendes Segment ausgebildet sind.

2. Fluggasturbine nach Anspruch 1, **dadurch gekennzeichnet, dass** der Entlastungskanal (31) in seinem an den Vorverdichter (30) angrenzenden Bereich im Wesentlichen in Radialrichtung verläuft.

3. Fluggasturbine nach einem der Ansprüche 1 oder 2, **dadurch gekennzeichnet, dass** zwischen jeder Leitschaufel (32) ein Entlastungskanal (31) ausgebildet ist.

4. Fluggasturbine nach einem der Ansprüche 1 bis 3, **dadurch gekennzeichnet, dass** ein abströmseitiger Bereich des Entlastungskanals (31) in dem Schaufelfuß (33) im Wesentlichen in axialer Richtung angeordnet ist.

5. Fluggasturbine nach Anspruch 4, **dadurch gekennzeichnet, dass** zumindest ein Teil des sich axial erstreckenden Entlastungskanals (31) mittels eines Verschlusselements (35) zum Nebenstromkanal (29) abgedeckt ist.

6. Fluggasturbine nach einem der Ansprüche 1 bis 5, **dadurch gekennzeichnet, dass** die Leitschaufeln (32) als das Kerntriebwerk (10) lagerndes Strukturelement ausgebildet sind.

7. Fluggasturbine nach einem der Ansprüche 1 bis 6, **dadurch gekennzeichnet, dass** der Schaufelfuß (33) als Gusskonstruktion ausgebildet ist.

8. Fluggasturbine nach einem der Ansprüche 1 bis 7, **dadurch gekennzeichnet, dass** der Schaufelfuß (33) zumindest ein dem Entlastungskanal (31) zugeordnetes Absperrelement (34) umfasst.

## Claims

1. Aircraft gas turbine having a core engine (10) and a bypass duct (29) surrounding the latter, wherein the core engine (10) includes in its inflow zone a booster (30), in the area of which at least one booster bleed duct (31) is provided for supplying an airflow from the booster (30) into the bypass duct (29), and a stator vane row (32) arranged in the bypass duct (29) downstream of a fan (12), wherein a vane root (33) of the stator vane (32) is designed as a structural element mounting the core engine, and that the booster bleed duct (31) is provided inside the vane root (33) and issues downstream of the stator vane (32) into the bypass duct (29), **characterized in that** several vane roots (33) are designed as a segment extending in the circumferential direction.

2. Aircraft gas turbine in accordance with Claim 1, **characterized in that** the booster bleed duct (31) extends substantially in the radial direction in its area adjacent to the booster (30).

3. Aircraft gas turbine in accordance with one of the Claims 1 or 2, **characterized in that** a booster bleed duct (31) is provided between each stator vane (32).

4. Aircraft gas turbine in accordance with one of the Claims 1 to 3, **characterized in that** a downstream-side area of the booster bleed duct (31) in the vane root (33) is arranged substantially in the axial direction.

5. Aircraft gas turbine in accordance with Claim 4, **characterized in that** at least one part of the axially extending booster bleed duct (31) is covered towards the bypass duct (29) by means of a sealing element (35).

6. Aircraft gas turbine in accordance with one of the Claims 1 to 5, **characterized in that** the stator vanes (32) are designed as a structural element mounting the core engine (10).

7. Aircraft gas turbine in accordance with one of the Claims 1 to 6, **characterized in that** the vane root (33) is designed as a cast structure.

8. Aircraft gas turbine in accordance with one of the Claims 1 to 7, **characterized in that** the vane root (33) includes at least one shut-off element (34) associated with the booster bleed duct (31).

## Revendications

1. Turbine à gaz aéronautique avec un moteur de base (10) et un canal de flux secondaire (29) entourant celui-ci, sachant que le moteur de base (10) comprend dans sa zone d'admission un pré-compresseur (30) au niveau duquel est prévu au moins un canal de décharge (31) pour amener un flux d'air du pré-compresseur (30) vers le canal de flux secondaire (29), ainsi qu'avec une rangée d'aubes directrices (32) disposées dans le canal de flux secondaire (29) en aval d'une soufflante (12), sachant qu'un pied d'aube (33) de l'aube directrice (32) est conçu sous forme d'élément structural supportant le moteur de base et que le canal de décharge (31) est constitué dans le pied d'aube (33) et débouche dans le canal de flux secondaire (29) an aval de l'aube directrice (32), **caractérisée en ce que** plusieurs pieds d'aubes (33) sont conçus sous la forme d'un segment s'étendant dans le sens circonférentiel.

2. Turbine à gaz aéronautique selon la revendication n° 1, **caractérisée en ce que** le canal de décharge (31) s'étend essentiellement dans le sens radial, dans sa zone avoisinant le pré-compresseur (30).

3. Turbine à gaz aéronautique selon une des revendications n° 1 ou n° 2, **caractérisée en ce qu'**un canal de décharge (31) est constitué entre chaque aube directrice (32).

4. Turbine à gaz aéronautique selon une des revendications n° 1 à n° 3, **caractérisée en ce qu'**une zone du canal de décharge (31) dans le pied d'aube (33), qui est située en aval est disposée essentiellement dans le sens axial.

5. Turbine à gaz aéronautique selon la revendication n° 4, **caractérisée en ce qu'**au moins une partie du canal de décharge (31) s'étendant axialement est recouverte par un élément d'étanchéité (35) vers le canal de flux secondaire (29).

6. Turbine à gaz aéronautique selon une des revendications n° 1 à n° 5, **caractérisée en ce que** les aubes directrices (32) sont conçues sous forme d'élément structural supportant le moteur de base (10).

7. Turbine à gaz aéronautique selon une des revendications n° 1 à n° 6, **caractérisée en ce que** le pied d'aube (33) est conçu sous forme de structure en fonte.

8. Turbine à gaz aéronautique selon une des revendications n° 1 à n° 7, **caractérisée en ce que** le pied d'aube (33) comprend au moins un élément d'arrêt (34) associé au canal de décharge (31).
